## Europäisches Patentamt
## European Patent Office
## Office européen des brevets

(19)

(11) Veröffentlichungsnummer: **0 141 798**
**B1**

(12)

# EUROPÄISCHE PATENTSCHRIFT

(45) Veröffentlichungstag der Patentschrift:
12.06.87

(51) Int. Cl.⁴: **B 21 B 37/10**

(21) Anmeldenummer: **84890124.5**

(22) Anmeldetag: **03.07.84**

(54) Anlage zum Warmwalzen von band- oder tafelförmigem Walzgut.

(30) Priorität: **06.09.83 AT 3200/83**

(43) Veröffentlichungstag der Anmeldung:
**15.05.85 Patentblatt 85/20**

(45) Bekanntmachung des Hinweises auf die Patenterteilung:
**12.06.87 Patentblatt 87/33**

(84) Benannte Vertragsstaaten:
**BE DE FR GB IT LU NL SE**

(56) Entgegenhaltungen:
**EP-A-0 010 976**
**EP-A-0 032 536**
**EP-A-0 048 503**
**DD-A-28 781**
**DE-A-1 452 102**

(73) Patentinhaber: **VOEST- ALPINE Aktiengesellschaft, Muldenstrasse 5, A-4020 Linz (AT)**

(72) Erfinder: **Der Erfinder hat auf seine Nennung verzichtet**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft eine Anlage zum Warmwalzen von band- oder tafelförmigem Walzgut, insbesondere Reversierwalzwerk, mit Rollgängen für den Walzguttransport und seitlichen, quer zur Transportrichtung verstellbaren Verschiebern für die Walzgutführung.

Im Zuge eines Walzvorganges wird das Walzgut auf Rollgängen transportiert und den einzelnen Walzgerüsten zugebracht, wobei in Walzwerken mit mehreren hintereinandergereihten Gerüsten und vor allem in Reversierwalzwerken zusätzlich Verschieber zur Seitenfürung des Walzgutes vorzusehen sind. Diese Verschieber sollen das Walzgut geradeführen und auf Mitte Walzbahn ausrichten, so daß sie durch seitliches Verstellen an die jeweilige Walzgutbreite angepaßt werden müssen, was insbesondere bei Reversierwalzwerken schnelle und genau steuerbare Verschieberbewegungen verlangt. Gerade bei Walzwerken mit mehreren Walzgerüsten und vor allem bei Reversierwalzwerken kommt es aber auch im Laufe der Walzung insbesondere für die Längsränder und Endbereiche des Walzgutes zur Gefahr einer stärkeren, die Qualität des Fertigproduktes beeinträchtigenden Abkühlung, wobei hier bisher auf Grund der vorhandenen Verschieber und der beschränkten Raumverhältnisse zwischen den Walzgerüsten bzw. den Walzgerüsten und den vor- und nachgeschalteten Heißhaspelanlagen bei Reversierwalzen Abdeckungen zur Vermeidung von Wärmeabstrahlverlusten nicht eingesetzt werden können, da diese bekannten Abdeckungen eigene Tragkonstruktionen benötigen und mit zu viel Platzbedarf verbunden slnd. So gibt es gemäß der EP-A2-0 032 536 zur Abdeckung eines Rollganges seitliche schalenförmige Reflektoren, die mittels besonderer Vorrichtungen bewegbar sind, doch versperren diese Reflektoren den Weg der Verschieber für eine Walzgutführung. Die plattenförmigen, den Rollgang nach oben hin abdeckenden Reflektoren nach der DE-A-14 52 102 hingegen erfordern eine spezielle, sehr aufwendige und platzraubende Halte- und Betätigungseinrichtung und sind daher ebenfalls ausschließlich für freie, verschieberlose Rollgänge geeignet. Die aus der DD-A- 28 781 bekannte Abdeckung wiederum besteht aus tunnelförmig zusammenschiebbaren Hauben, die von vornherein eine Walzgutführung mit Verschiebern unterbinden und außerdem noch eine Kontrolle des Walzguttransportes sehr erschweren.

Der Erfindung liegt daher die Aufgabe zugrunde, diese Nachteile zu beseitigen und eine Anlage der eingangs geschilderten Art so zu verbessern, daß sie der Abkühlungsgefahr für das Walzgut trotz beengter Raumverhältnisse mit einfachen konstruktiven Mitteln wirkungsvoll und ohne störende Beeinflussung der Verschieberfunktion zu begegnen erlaubt.

Die Erfindung löst diese Aufgabe dadurch, daß den Rollgängen im Bereich der Verschieber eine öffenbare Abdeckung zugeordnet ist, die sich mitbewegbar an den Verschiebern abstützt. Durch das direkte Aufsetzen der Abdeckung auf die Verschieber ist keinerlei zusätzliche Tragkonstruktion mehr erforderlich und die Abdeckung kann platzsparend überall dort, wo auch Verschieber vorgesehen sind, auf rationelle Weise angeordnet werden, so daß insbesondere in den heiklen Bereichen, wie zwischen den Reversiergerüsten und den Heißhaspelanlagen, unerwünschte Wärmeverluste des Walzgutes unterbleiben. Da die Abdeckung die Einstellbewegungen der Verschieber mitmacht, stört sie deren Funktion nicht und durch geeignetes Öffnen erlaubt sie außerdem bei Bedarf eine optische Funktionskontrolle oder Zwischenarbeiten am Walzgut, wie Entzundern od. dgl. Die Abdeckung selbst kann dabei sehr einfach und leicht, z. B. als versteifter Blechhohlkörper mit die Hohlräume ausfüllendem Wärmedämmaterial ausgebildet sein.

Eine zweckmäßige Konstruktion ergibt sich, wenn erfindungsgemäß die Abdeckung aus einer Platte besteht, die an den der einen Rollganglängsseite zugeordneten Verschiebern hochschwenkbar gelagert ist und auf Stützrollen der der anderen Rollganglängsseite zugeordneten Verschieber aufliegt. Diese Platte kann beispielsweise über Hydrauliktriebe od.dgl. zum Öffnen hochgeschwenkt werden, wodurch der ganze Rollgangbereich zwischen den Verschiebern freigemacht wird, und ermöglicht auch in geschlossener Lage durch ihre Abstützung auf den Stützrollen eine ungehinderte Verstellbewegung der Verschieber.

Besteht die Abdeckung aus zwei in unterschiedlicher Höhe gegeneinander frei vorkragenden Klappteilen, ergibt sich eine besonders einfache Konstruktion, wenn die Klappteile als schwenkbare Horizontalschenkel eines mit seinem Vertikalschenkel auf den Verschiebern sitzenden Winkelprofils ausgebildet sind. Die Klappteile sind problemlos zu öffnen und werden jeweils unabhängig voneinander mit den Verschiebern bei deren Verstellung mitbewegt. Dabei erlaubt die gegeneinander versetzte Höhenlage auch eine überlappende Abdeckung, ao daß es zu keinerlei Einschränkung der Verstellbewegung für die Verschieber kommt. Wird der Höhenabstand zwischen den beiden Klappteilen bewußt auf ein bestimmtes Maß erhöht, eröffnet sich auch bei geschlossenen Klappteilen durch den entstehenden Spalt die Möglichkeit einer Sichtkontrolle der Walzgutführung, was von großer Bedeutung sein kann. Der dadurch in Kauf zu nehmende Dämmverlust spielt keine Rolle, da die besonders gefährdeten Längsrandbereiche des Walzgutes abgedeckt bleiben und gegen eine Wärmeabstrahlung geschützt sind, insbesondere wenn Winkelprofile die Abdeckung bilden.

Gemäß einer anderen Ausgestaltung der Erfindung besteht die einerseits abhebbar, andererseits schwenkbar an den Verschiebern angelenkte Abdeckung aus wenigstens zwei scharnierartig miteinander verbundenen Faltteilen, wodurch sich die Abdeckung ähnlich wie ein Balg zusammendrücken bzw. auseinanderziehen läßt und so die Verschieberbewegung problemlos mitmachen kann.

In der Zeichnung ist der Erfindungsgegenstand beispielsweise dargestellt, und zwar zeigen

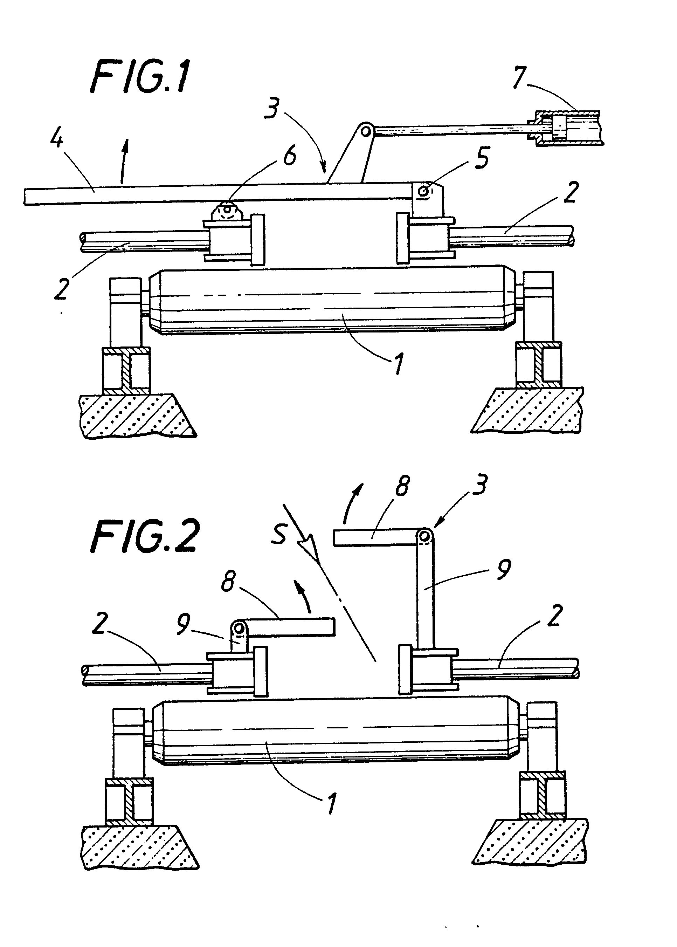

Fig. 1 bis 4 verschiedene Ausführungsmöglichkeiten einer erfindungsgemäßen Rollgangabdeckung in schematischer Stirnansicht.

Einem Rollgang 1 für den Walzguttransport sind quer zur Transportrichtung verstellbare seitliche Verschieber 2 für die Walzgutführung zugeordnet, wobei das nicht weiter dargestellte Walzgut durch die in ihrem gegenseitigen Abstand an die jeweilige Breite des Walzgutes anpaßbaren Verschieber 2 auf dem Rollgang 1 zentriert wird. Um Wärmeabstrahlverluste zu vermeiden, ist eine sich direkt an den Verschiebern 2 abstützende Abdeckung 3 für den zwischen den Verschiebern liegenden Rollgangbereich vorgesehen, welche Abdeckung durch Wärmeisolierung und Reflexion der Wärmestrahlung eine zu starke, die Qualität des Fertigproduktes beeinträchtigende Abkühlung des Walzgutes unterbindet. Diese Abdeckung 3 läßt sich mit den Verschiebern 2 mitbewegen und kann außerdem geöffnet werden, um Entzunderungsarbeiten, Sichtkontrollen u. dgl. durchzuführen.

Gemäß Fig. 1 besteht die Abdeckung 3 aus einer Platte 4, die an den Verschiebern 2 der einen Rollganglängsseite über ein Schwenklager 5 hochschwenkbar gelagert ist und auf Stützrollen 6 der gegenüberliegenden Verschieber aufliegt. Dadurch kann die gegengleiche Verstellbewegung der Verschieber 2 ungestört und bei geschlossener Abdeckung durchgeführt werden. Ein Öffnen der Abdeckung erfolgt über einen Hydraulikzylinder 7, der die Platte 4 um das Schwenklager 5 hochschwenkt und den Rollgang 1 freigibt.

Ein besonders zweckmäßiges Ausführungsbeispiel der Abdeckung 3 ist in Fig. 2 angedeutet. Hier setzt sich die Abdeckung aus zwei gegeneinander frei vorkragenden Klappteilen 8 zusammen, die in unterschiedlicher Höhe an den Verschiebern 2 jeder Rollganglängsseite angeordnet sind. Diese Klappteile 8 können ebenfalls in nicht näher dargestellter Weise hochgeschwenkt werden, um den Rollgang 1 freizumachen, sie bilden aber darüber hinaus bei entsprechend großem gegenseitigen Höhenabstand einen Sichtspalt, der auch bei geschlossener Abdeckung die Sicht (Pfeil S) auf eine Führungsseite freigibt und die laufende Beobachtung des Walzguttransportes ermöglicht. Trotz des offenen Spaltes werden dabei durch die Klappteile 8 die besonders abkühlungsgefährdeten Randbereiche des Walzgutes abgedeckt, wobei eine verbesserte Schutzwirkung dadurch erreicht wird, daß die Klappteile 8 als Horizontalschenkel eines mit seinem Vertikalschenkel 9 auf den Verschiebern 2 aufsitzenden Winkelprofils auagebildet sind.

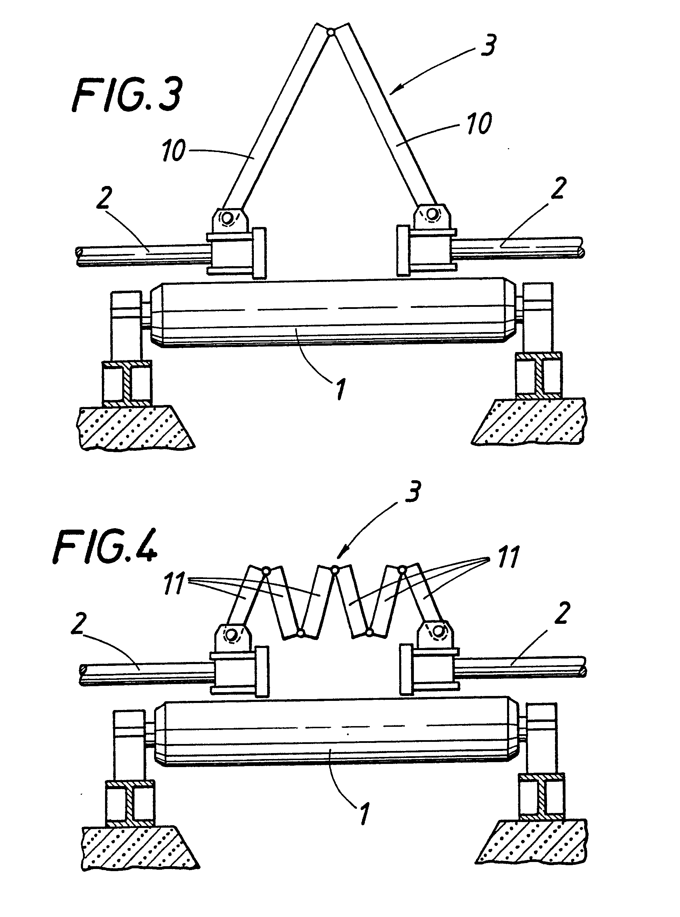

Bei den Ausführungsbeispielen gemäß Fig. 3 und 4 besteht die Abdeckung 3 jeweils aus scharnierartig miteinander verbundenen Faltteilen 10, 11, die sich nach Art eines Balges entsprechend der Verschieberbewegung zusammen- bzw. auseinanderfalten lassen. Auch diese Abdeckung kann in nicht näher dargestellter Weise über Hydrauliktriebe od. dgl. von den Verschiebern einer Seite abgehoben und weggeschwenkt werden, um den Zugang zum Rollgang 1 freizugeben.

## Patentansprüche

1. Anlage zum Warmwalzen von band- oder tafelförmigem Walzgut, insbesondere Reversierwalzwerk, mit Rollgängen (1) für den Walzguttransport und seitlichen, quer zur Transportrichtung verstellbaren Versschiebern (2) für die Walzgutführung, dadurch gekennzeichnet, daß den Rollgängen (1) im Bereich der Verschieber (2) eine öffenbare Abdeckung (3) zugeordnet ist, die sich mitbewegbar an den Verschiebern (2) abstützt.

2. Anlage nach Anspruch 1, dadurch gekennzeichnet, daß die Abdeckung (3) aus einer Platte (4) besteht, die an den der einen Rollganglängsseite zugeordneten Verschiebern (2) hochschwenkbar gelagert ist und auf Stützrollen (6) der der anderen Rollganglängsseite zugeordneten Verschieber (2) aufliegt.

3. Anlage nach Anspruch 1, mit einer Abdeckung (3) aus zwei in unterschiedlicher Höhe gegeneinander frei vorkragenden Klappteilen (8), dadurch gekennzeichnet, daß die Klappteile (8) als schwenkbare Horizontalschenkel eines mit seinem Vertikalschenkel (9) auf den Verschiebern (2) sitzenden Winkelprofils ausgebildet sind.

4. Anlage nach Anspruch 1, dadurch gekennzeichnet, daß die einerseits abhebbar, andererseits schwenkbar an den Verschiebern (2) angelenkte Abdeckung (3) aus wenigstens zwei scharnierartig miteinander verbundenen Faltteilen (10; 11) besteht.

## Claims

1. A plant for hot-rolling strip or plate stock, particularly a reversing rolling mill, comprising roller conveyors (1) for transporting the stock to be rolled and laterally disposed manipulators (2), which are adjustable transversely to the direction of transport and serve to guide the stock to be rolled, characterized in that a cover (3), which is adapted to be opened, is associated with the roller conveyors (1) adjacent to the manipulators (2) and is supported on the manipulators (2) and adapted to be moved in unison with them.

2. A plant according to claim 1, characterized in that the cover (3) consists of a plate (4), which is mounted for an upward pivotal movement on the manipulators (2) which are associated with one side of the roller conveyor, and said plate lies on backing rollers (6) of the manipulators (2) which are associated with the other longitudinal side of the roller conveyor.

3. A plant according to claim 1, comprising a cover (3) consisting of two flaps (8), which freely protrude towards each other on different levels, characterized in that the flaps (8) consists of pivoted horizontal flanges of an angle member, which has a vertical flange (9) that is supported on the manipulators (2).

4. A plant according to claim 1, characterized in that the cover (3) is adapted to be lifted off on one side and is pivoted to the manipulators (2) on the other side and consists of two flaps (10; 11), which are connected by a hinge.

**Revendications**

1. Installation pour le laminage à chaud de produit à laminer en forme de bande ou de plaque, en particulier laminoir réversible, munie de trains de rouleaux (1) pour le transport du produit à laminer et de manipulateurs latéraux (2) réglables transversalement à la direction de transport, pour l'amenée du produit à laminer, caractérisée par le fait qu'aux trains de rouleaux (1) est adjoint, dans la région des manipulateurs (2), un recouvrement (3) pouvant s'ouvrir, qui s'appuie sur les manipulateurs (2) en pouvant suivre leur mouvement.

2. Installation selon la revendication 1, caractérisée par le fait que le recouvrement (3) est formé d'une plaque (4) qui est montée de manière à pouvoir pivoter vers le haut sur les manipulateurs (2) adjoints à l'un des côtés longitudinaux du train de rouleaux et repose sur des rouleaux de soutien (6) des manipulateurs (2) adjoints à l'autre côté longitudinal du train de rouleaux.

3. Installation selon la revendication 1, munie d'un recouvrement (3) formé de deux parties basculantes (8) faisant saillie librement l'une vers l'autre à une hauteur différente, caractérisée par le fait que les parties basculantes (8) sont conçues sous forme de branches horizontales (pouvant pivoter) d'un profilé angulaire monté par son aile verticale (9) sur les manipulateurs (2).

4. Installation selon la revendication 1, caractérisée par le fait que le recouvrement (3), articulé aux manipulateurs (2) d'une part de manière à pouvoir se soulever, d'autre part de manière à pouvoir pivoter, est formé d'au moins deux parties pliantes (10; 11) reliées entre elles à la façon d'une charnière.

# FIG.1

# FIG.2

FIG.3

FIG.4